# FASCICULE DE BREVET EUROPEEN

(11) **EP 1 636 082 B1**
(45) Date de publication et mention de la délivrance du brevet: **25.03.2009**
(21) Numéro de dépôt: 04767433.8
(22) Date de dépôt: 23.06.2004
(51) Int. Cl.: B62B 7/08

(54) **VOITURE D'ENFANT A CHASSIS PLIANT COMPRENANT DEUX MOYENS DE VERROUILLAGE PLIAGE DISTINCTS, ET CHASSIS CORRESPONDANT**
KINDERWAGEN MIT ZUSAMMENKLAPPBAREM GESTELL MIT ZWEI VERSCHIEDENEN MITTELN ZUR VERRIEGELUNG DES ZUSAMMENKLAPPENS UND ENTSPRECHENDES GESTELL
CHILDRENS PUSHCHAIR WITH FOLDING CHASSIS HAVING TWO DISTINCT FOLD LOCKING MEANS AND CORRESPONDING CHASSIS

(30) Priorité: 23.06.2003 FR 0307581
(43) Date de publication de la demande: 22.03.2006
(73) Titulaire: DOREL FRANCE SA, 49309 Cholet (FR)
(72) Inventeur: AGENEAU, Laurent, F-44210 Pornic (FR)
(74) Mandataire: Bioret, Ludovic
(86) Numéro de dépôt international: PCT/FR2004/001577
(87) Numéro de publication internationale: WO 2005/000660

(56) Documents cités:
- EP-A- 0 301 828
- EP-A- 0 825 088
- FR-A- 2 566 357
- US-A- 4 412 689
- US-A- 5 709 400
- US-A- 6 155 579

## Description

Le domaine de l'invention est celui de la puériculture. Plus précisément, l'invention concerne les voitures d'enfant, et notamment les mécanismes de pliage pour de telles voitures d'enfants.

On connaît déjà de nombreuses techniques de pliage de châssis de poussette. D'une façon générale, on cherche notamment à concilier au moins certains des objectifs suivants :
- efficacité du pliage, l'encombrement de la poussette pliée devant être le plus réduit possible, de façon à faciliter son rangement, et son transport, par exemple dans un véhicule automobile ;
- simplicité des manipulations de pliage et dépliage, l'utilisateur devant pouvoir effectuer ces opérations le plus facilement possible ;
- sécurité de l'enfant transporté et notamment contrôle du pliage (pour lutter contre un pliage non souhaité, en particulier en présence d'un enfant) ;
- simplicité et faible coût de la fabrication.

Selon une technique, chaque bras poussoir peut coulisser parallèlement au brancard avant entre une position déployée où le bras poussoir prolonge sensiblement le brancard avant et une position repliée où le bras poussoir et le brancard avant correspondant sont disposés côte à côte. Chaque brancard arrière est articulé au voisinage de son extrémité supérieure sur le brancard avant correspondant.

On connaît également les poussettes à pliage cassé. Selon cette technique, les bras poussoirs se trouvent, en position dépliée, sensiblement dans le prolongement des piétements avant, et basculent par rapport à ces derniers lors du pliage.

Bien sûr, des moyens de verrouillage sont prévus, qui maintiennent la poussette dans sa position dépliée, et qui empêchent un pliage non souhaité, notamment lorsqu'un enfant est présent.

Toujours dans le but d'améliorer l'ergonomie et de faciliter la tâche de l'utilisateur, on cherche également à simplifier les manipulations nécessaires au pliage de la poussette.

Un double mécanisme est prévu, de chaque côté de la poussette, à l'emplacement où s'effectue réellement le déverrouillage et le pliage (qu'il s'agisse de moyens permettant le coulissement des bras-poussoirs le long des piètements avant ou à l'intérieur de ces derniers, ou des charnières permettant de ramener par basculement les bras-poussoirs le long de ces piètements avant).

Cette technique connue présente l'inconvénient d'être relativement peu aisée à mettre en oeuvre. En effet, elle suppose une double manipulation, puisqu'il faut, en général, agir de façon simultanée sur les deux côtés de la poussette. De plus, cela oblige l'utilisateur à se baisser pour effectuer le déverrouillage, puis à agir, d'une façon ou d'une autre, sur les bras-poussoirs. Enfin, du fait de leur position, ces moyens de déverrouillage peuvent être accessibles à l'enfant assis dans la poussette. Des sécurités complémentaires sont donc nécessaires pour empêcher ce dernier d'effectuer un déverrouillage intempestif.

Le doublement de la sécurité liée au pliage des voitures d'enfant est d'ailleurs imposée par les normes et les réglementations en vigueur, qui prescrivent le recours à deux sécurités devant successivement être déverrouillées avant de pouvoir procéder au pliage complet de la poussette.

Pour faciliter la manipulation de ces moyens de verrouillage, une solution a été proposée, qui consiste à déporter les moyens de commande du déverrouillage au niveau de la poignée, à un emplacement directement accessible par l'utilisateur. Dans ce cas, cette commande agit sur les moyens de déverrouillage par l'intermédiaire de câbles circulant à l'intérieur de la poignée et des bras-poussoirs. En actionnant la commande, on tire sur les câbles qui déverrouillent les moyens de déverrouillage de façon à permettre le pliage de la poussette (après que des seconds moyens de déverrouillage ont également été déverrouillés).

Le déverrouillage de ces doubles moyens de verrouillage suppose une succession d'opérations, parfois peu aisées malgré les efforts des constructeurs pour proposer des solutions ergonomiques. Il faut tout d'abord agir sur les premiers moyens, puis sur les seconds avant que le pliage soit possible.

Une difficulté est qu'il n'est pas aisé de vérifier que les premiers moyens ont été déverrouillés correctement, puisque, par définition, le pliage ne sera possible que lorsqu'on aura agit sur les seconds moyens. En d'autres termes, rien n'indique à l'utilisateur que les moyens de verrouillage correspondants sont déverrouillés. L'utilisateur peut donc avoir parfois un doute concernant la position de ces moyens de verrouillage puisque rien ne lui confirme l'action qu'il estime avoir engagée.

De plus, il n'est donc pas exclu que, dans certaines situations, l'utilisateur déverrouille involontairement les moyens de verrouillage liés aux moyens de commande présents sur la poignée et ne procède pas immédiatement au pliage, les moyens de verrouillage en question restant déverrouillés et l'utilisateur omettant de les réenclencher.

On peut alors utiliser la poussette dans une situation à sécurité réduite, seuls les seconds moyens de verrouillage restant actifs.

L'invention a notamment pour objectif de pallier ces différents inconvénients de l'art antérieur.

Plus précisément, l'invention a pour objectif de proposer une voiture d'enfant pliante qui permette d'améliorer encore la sécurité liée au pliage, et l'ergonomie correspondante.

En ce sens, l'invention a pour objectif de fournir une telle voiture d'enfant dont le désenclenchement de moyens de verrouillage du pliage est facilement détecté par l'utilisateur. En d'autres termes, un objectif de l'invention est de fournir une telle voiture d'enfant qui soit « communicante », en ce qui concerne la position des moyens de verrouillage.

L'invention a aussi pour objectif de fournir une telle voiture d'enfant qui permette de confirmer à l'utilisateur l'action de déverrouillage qu'il vient d'engager mais également de maintenir une indication de l'état déverrouillée de ces moyens de verrouillage jusqu'à leur ré-enclenchement éventuel.

Encore un autre objectif de l'invention est de fournir une telle voiture pour enfant qui soit simple de conception et facile à mettre en oeuvre.

Ces objectifs, ainsi que d'autres qui apparaîtront par la suite, sont atteints à l'aide d'une voiture d'enfant à châssis pliant comprenant des premiers et des deuxièmes moyens de verrouillage du pliage dudit châssis devant être tous deux amenés dans une position déverrouillée pour permettre le pliage complet dudit châssis, le déverrouillage desdits premiers moyens de verrouillage entraînant un amorçage dudit pliage, jusqu'à une position intermédiaire à partir de laquelle le pliage ne peut être poursuivi qu'en déverrouillant lesdits deuxièmes moyens de verrouillage, comme décrit dans le EP 0825088, qui présente l'état de la technique le plus proche,
la voiture d'enfant comprenant au moins un poussoir comprenant au moins deux éléments susceptibles de coulisser l'un par rapport à l'autre pour amorcer le pliage dudit châssis lorsque lesdits premiers moyens de verrouillage sont déverrouillés.

On obtient ainsi un moyen de confirmation claire de l'action de déverrouillage engagée par l'utilisateur, la poussette répondant à cette action (et uniquement si le déverrouillage correspondant est effectif) par une réaction du châssis.

L'utilisateur sait alors, sans aucun doute, que les moyens de verrouillage qu'il vient de commander est bien dans un état déverrouillé. Il sait donc qu'il peut dès lors agir sur les seconds moyens de verrouillage, et/ou qu'il ne doit pas continuer à utiliser la poussette dans cette position intermédiaire.

Avantageusement, la voiture d'enfant comprend des moyens de rappel élastique montés entre lesdits deux éléments dudit poussoir, lesdits moyens de rappel tendant à rapprocher lesdits deux éléments l'un de l'autre lorsque lesdits premiers moyens de verrouillage sont déverrouillés.

On s'assure ainsi que l'action de déverrouillage des moyens de verrouillage correspondants est systématiquement suivi du mouvement relatif des deux éléments du poussoir.

On note toutefois que le rapprochement des deux éléments du poussoir peut être obtenu du simple fait du propre poids des éléments du poussoir, et/ou d'une poussée de l'utilisateur, en particulier dans un mode de coulissement qui est présenté par la suite et selon lequel le poussoir et le brancard avant coulissant l'un par rapport à l'autre sans espace entre eux (des coefficients particulièrement satisfaisants pouvant être envisagés entre le rail et le coulisseau).

On obtient de cette façon un déplacement relatif des deux éléments du poussoir relativement simple (à la différence du cas selon lequel les éléments seraient mobiles pendant l'amorce du pliage).

Préférentiellement, lesdits deux éléments dudit poussoir sont susceptibles de coulisser l'un par rapport à l'autre sur une distance de l'ordre de 1 à 2 cm.

Une telle distance (qui pourra bien entendu varier dans d'autres modes de réalisation envisageables) est avantageuse en ce qu'elle permet un déplacement suffisamment net du châssis pour confirmer clairement à l'utilisateur l'action engagée, ceci en évitant un mouvement de pliage de trop grand amplitude qui pourrait être de nature à nuire à la sécurité ou au confort d'un enfant qui serait encore installé dans la poussette.

Selon une solution avantageuse, l'un desdits deux éléments dudit poussoir, dit élément passif, reste fixe pendant l'amorçage du pliage tandis que l'autre desdits deux éléments, dit élément actif, est mobile pendant l'amorçage du pliage, lesdits premiers moyens de verrouillage étant portés ledit élément actif dudit poussoir.

Selon une solution avantageuse, la voiture d'enfant comprend au moins un poussoir et au moins un brancard avant montés coulissant l'un par rapport à l'autre, sans espace entre eux, ledit poussoir présentant au-moins un rail et ledit brancard avant présentant au moins un coulisseau prévu pour coulisser dans ledit rail.

On obtient ainsi, pour le pliage du châssis, un guidage du coulissement fiable et efficace, grâce au fait que le bras poussoir et le brancard coulissent l'un par rapport à l'autre sans espace entre eux, l'un formant rail et l'autre coulisseau.

En effet, le rail et le coulisseau restant en permanence en contact direct ou indirect l'un contre l'autre, l'ensemble mécanique n'est pas, ou peu, sujet à l'apparition de jeux pouvant nuire au bon fonctionnement des pièces en coulissement comme c'est le cas avec les solutions classiques.

On obtient donc une solution de pliage fiable de façon pérenne.

En outre, le risque de pincement de doigts entre le bras poussoir et le brancard avant est éliminé puisque qu'aucun espace n'apparaît entre ces deux éléments.

Bien entendu, le principe de l'invention n'est pas limité à ce type pliage particulier et pourra être envisagé, selon d'autres modes de réalisation, avec l'un des pliages rappelés précédemment.

Selon un mode de réalisation préférentiel, lesdits premiers moyens de verrouillage comprennent au moins un pion de verrouillage coopérant avec une encoche correspondante ménagée dans un brancard avant, ledit pion étant monté de façon qu'il se rétracte à l'intérieur dudit élément actif dudit poussoir en position déverrouillée.

Préférentiellement, ledit pion est monté sur une lame logée dans un logement d'une pièce pouvant coulisser à l'intérieur d'un coulisseau susceptible de coulisser à l'intérieur dudit poussoir et dont l'une des extrémités est couplée audit élément passif dudit poussoir, ladite pièce étant reliée à des moyens de commande, ledit logement étant conformé de façon que :
- en position de repos desdits moyens de commande, ledit pion tend à coopérer avec l'encoche correspondante ;
- lorsqu'on agit sur lesdits moyens de commande, la lame portant ledit pion est guidée vers l'intérieur dudit coulisseau, entraînant ledit pion et permettant ainsi le déverrouillage.

Ladite lame est avantageusement repliée sur elle-même, et forme des moyens de rappel tendant à ramener ledit pion en position de verrouillage. Par ailleurs, selon un aspect avantageux de l'invention, permettant d'obtenir un meilleur guidage du pion, ledit logement présente deux plans inclinés de guidage, coopérant avec deux surfaces de contact correspondantes définies sur ladite lame, de part et d'autre dudit pion.

Selon une autre caractéristique de l'invention, la voiture d'enfant comprend des moyens permettant de maintenir lesdits moyens de commande desdits premiers moyens de verrouillage dans une position correspondant au déverrouillage desdits premiers moyens de verrouillage jusqu'à un nouveau verrouillage de ceux-ci.

Un rappel est ainsi fourni à l'utilisateur sur l'état des moyens de verrouillage correspondant.

Dans ce cas, ledit coulisseau et ledit élément passif dudit poussoir sont reliés par l'intermédiaire de moyens de rappel élastique tendant à rapprocher ledit coulisseau et ledit élément passif, lorsque lesdits premiers moyens de verrouillage sont en position déverrouillée.

De cette façon, une fois les deux éléments du poussoir rapprochés l'un de l'autre, le ressort correspondant est relâché. Le moyen de commande qui vient d'être actionné reste dans la position qu'il occupe puisque, à l'inverse, le retour dans la position initial du moyen de commande impliquerait la mise en tension du ressort. Aussi, par défaut, le moyen de commande reste dans un état correspondant au déverrouillage et indiquant celui-ci.

Préférentiellement, lesdits moyens de commande sont montés sur leur support de façon à laisser apparaître une indication visuelle du déverrouillage desdits premiers moyens de verrouillage.

De cette façon, on augmente encore l'efficacité du « non retour » en position initiale du moyen de commande, cleui-ci laissant apparaître par exemple-un code couleur rappelant à l'utilisateur le déverrouillage qu'il a opéré.

Avantageusement, lesdits premiers moyens de verrouillage sont commandés de façon déportée à l'aide desdits moyens de commande. Dans ce cas, lesdits moyens -de commande peuvent être montés sur ladite poignée de guidage. Celle-ci est alors avantageusement montée sur ledit poussoir de façon à pouvoir pivoter par rapport à celui-ci, lesdits moyens de commande et lesdits moyens de verrouillage étant reliés par un câble dont l'extrémité est montée libre en rotation par rapport auxdits moyens de commande.

Ainsi, la modification de la position de la poignée n'influe en aucune manière sur les câbles de déverrouillage. Ces derniers ne risquent donc ni d'être détendus, ni d'activer involontairement le déverrouillage, lors d'une modification de l'inclinaison de la poignée.

Selon encore une autre caractéristique avantageuse, lesdits deuxièmes moyens de verrouillage sont portés par une pièce support montée sensiblement au sommet du compas formé, en position dépliée dudit châssis, par un brancard avant et un brancard arrière.

Avantageusement, le déverrouillage desdits deuxièmes moyens de verrouillage permet le coulissement complet dudit poussoir par rapport audit brancard avant.

Préférentiellement, le déverrouillage desdits deuxièmes moyens de verrouillage permet également le pivotement du brancard arrière en direction dudit brancard avant.

L'invention concerne également un châssis pliant pour voiture d'enfant telle que décrite précédemment.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- les figures 1A et 1B représentent une voiture d'enfant selon l'invention, respectivement en position repliée et en position dépliée ;
- les figures 2A et 2B sont des vues partielles en coupe de l'extrémité inférieure du bras poussoir d'une voiture d'enfant selon l'invention, respectivement en position dépliée et en position de pliage amorcé ;
- les figures 3A et 3B sont des vues d'une poignée d'une voiture d'enfant selon l'invention, présentant des moyens de commande du déverrouillage, respectivement en position de repos et en position de déverrouillage engagé ;
- la figure 4 est une vue éclatée des moyens de verrouillage et de déverrouillage d'une voiture d'enfant selon l'invention.

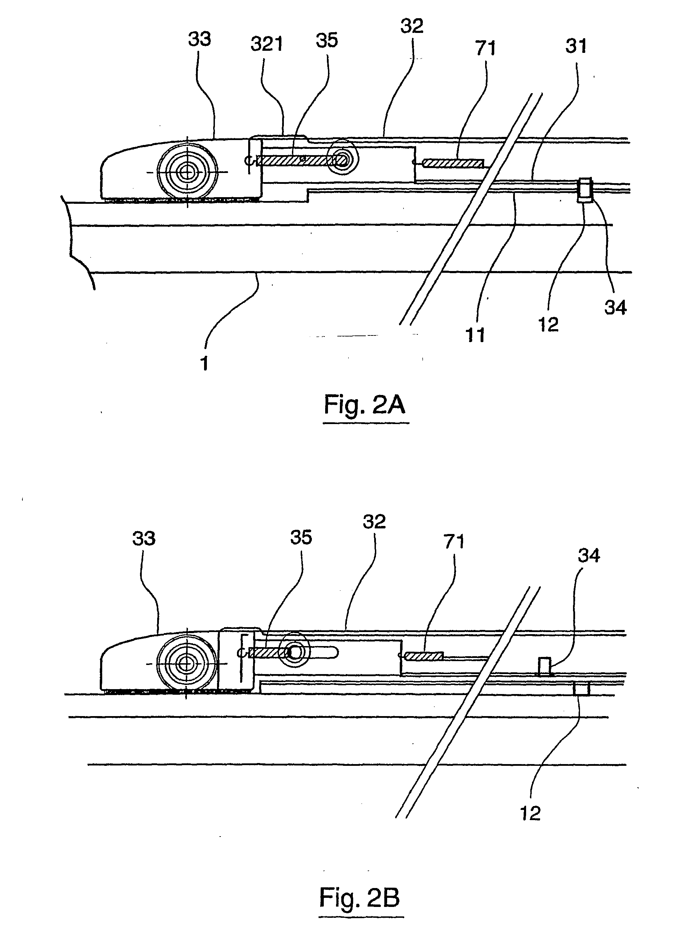

Tel qu'illustré par les figures 2A et 2B, une voiture d'enfant à châssis pliant comprend, de chaque côté de la voiture, un brancard avant 1 portant au moins une roue avant, un brancard arrière 2 portant une ou deux roues (ou plus) arrières, et un poussoir 3 coopérant avec une poignée de guidage 4.

Selon le présent mode de réalisation de l'invention, le poussoir 3 et le brancard avant 1 sont en effet solidarisés l'un à l'autre et forment un assemblage de deux pièces coulissant l'une par rapport à l'autre, sans espace entre elles.

Pour ce faire, le poussoir 3 présente un rail 31 tandis que le brancard avant 1 présente un coulisseau 11 conformé pour coulisser dans le rail 31 (figure 2A).

On note que, selon un autre mode de réalisation envisageable, le rail pourrait être porté par le brancard avant tandis que le coulisseau serait dans ce cas porté par le poussoir. En outre, il est également concevable d'envisager sans sortir du cadre de l'invention, plusieurs rails et/ou coulisseaux sur chacune des pièces, ou tout autre combinaison permettant le coulissement avec ou sans espace entre les pièces.

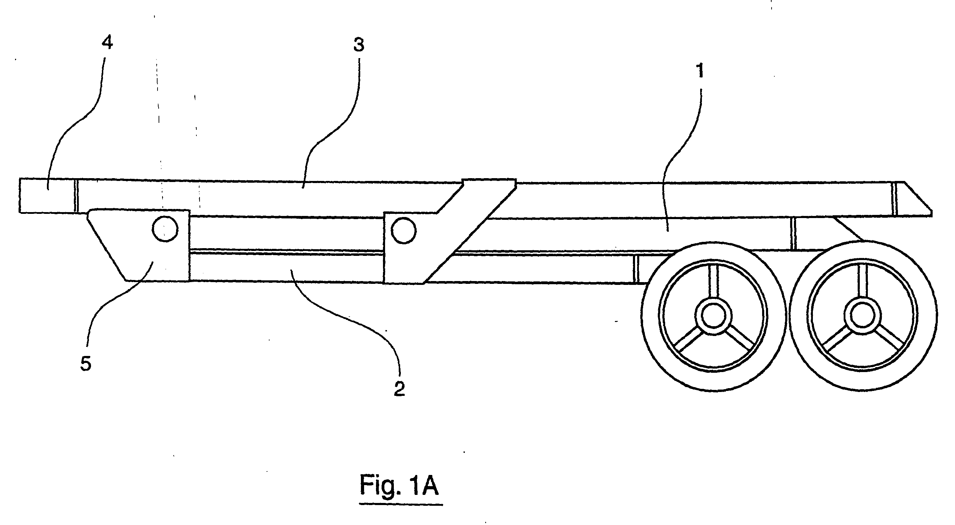

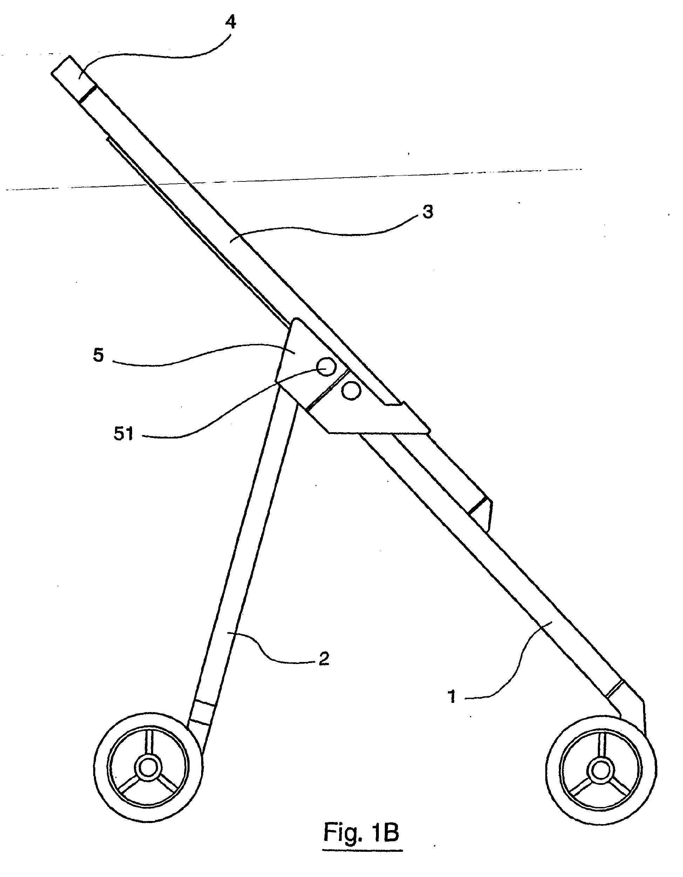

Le brancard arrière 2 est articulé par rapport au brancard avant 1, à l'aide d'une pièce de liaison 5 (figures 1A et 1B), par exemple en matière plastique. Cette pièce de liaison présente des moyens de verrouillage 51 permettant, lorsqu'ils sont déverrouillés, le coulissement complet du bras poussoir par rapport au brancard avant (après que des premiers moyens de verrouillage, décrits par la suite, aient été déverrouillés), ainsi que le pivotement du brancard arrière en direction du brancard avant.

Ainsi, la voiture d'enfant selon l'invention peut être dépliée (figure 1B), et pliée (figure 1A).

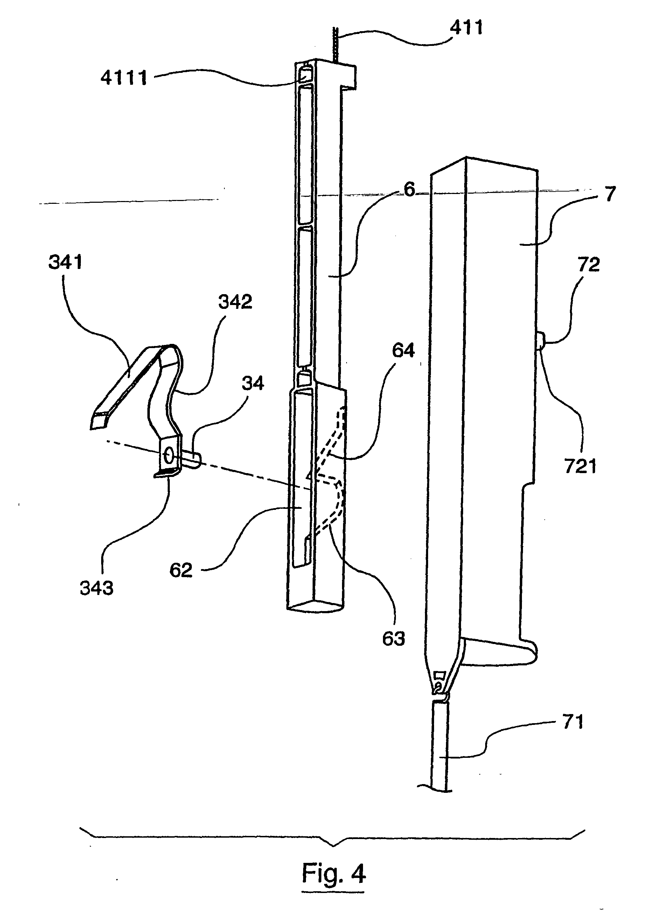

Comme cela vient d'être indiqué, le repliement complet de la poussette ne peut être effectué qu'après avoir déverrouillé deux moyens de verrouillage distincts : des premiers moyens de verrouillage (décrits plus en détail en référence à la figure 4) et des deuxièmes moyens de verrouillage 51.

Le déverrouillage de ces moyens de verrouillage peut être effectué dans un ordre quelconque en vue de réaliser le pliage complet de la poussette. Toutefois, on actionne en premier lieu les premiers moyens de verrouillage en vue d'amorcer le pliage du châssis jusqu'à une position à partir de laquelle le pliage ne peut être poursuivi qu'en déverrouillant lesdits deuxièmes moyens de verrouillage.

Ceci est illustré par les figures 2A et 2B.

Selon l'invention, illustré par les figures 2A et 2B, le poussoir comprend deux éléments, l'un dit passif (formé en l'occurrence par l'embout 33 du poussoir 3), l'autre dit actif 32, ces deux éléments 32 et 33 étant susceptibles de coulisser l'un par rapport à l'autre lorsque les premiers moyens de verrouillage sont déverrouillés, provoquant un déplacement du bras poussoir qui amorce le pliage du châssis.

Ce déverrouillage est réalisé en actionnant, par l'intermédiaire d'un câble de déverrouillage, le pion 34 de façon à le faire sortir d'un logement 12 ménagé dans le brancard avant 1 et à permettre ainsi le coulissement de l'élément actif 32 du poussoir 3 par rapport au brancard avant.

On note que la position de l'élément passif 33 est maintenue fixe pendant cette première phase, jusqu'à ce que les deuxièmes moyens de verrouillage soient déverrouillés.

Le passage de la configuration illustrée par la figure 2A (poussette totalement dépliée) à celle illustré par la figure 2B (pliage amorcé) est donc obtenu par le retrait du pion 34 du logement 12, ce qui entraîne le rapprochement de l'élément actif 32 par rapport à l'élément passif 33, ceci, selon le présent mode de réalisation, sous l'action d'un ressort 35 qui relie les éléments 32 et 33.

L'extrémité de l'élément actif 32 définit une chambre 321 dans laquelle vient partiellement se loger l'élément passif 33 après déverrouillage des premiers moyens de verrouillage. Une telle chambre présente préférentiellement une profondeur de l'ordre de 2 cm.

Le câble de déverrouillage mentionné précédemment peut agir sur de très nombreux types de moyens de verrouillage, fonction en particulier des moyens de pliage mis en oeuvre. Selon un mode de réalisation avantageux, les moyens de verrouillage comprennent un pion coopérant avec un élément de réception ménagé sur le piètement, ou sur une pièce solidaire de ce dernier. L'actionnement du câble a alors pour fonction de commander la rétractation du pion à l'intérieur du bras-poussoir.

Un mode de réalisation d'un tel système de verrouillage est illustré en figure 4. Bien sûr, l'invention peut être mise en oeuvre-avec tout autre type de verrouillage.

Dans le système de la figure 4, on a prévu une pièce 6, par exemple en matière plastique, qui est placée à l'intérieur d'un coulisseau 7 susceptible de coulisser à l'intérieur de l'élément actif 32 du bras-poussoir 3.

L'une des extrémités du coulisseau 7 est solidarisée à une extrémité de l'élément passif du bras-poussoir, par l'intermédiaire d'un ressort 71.

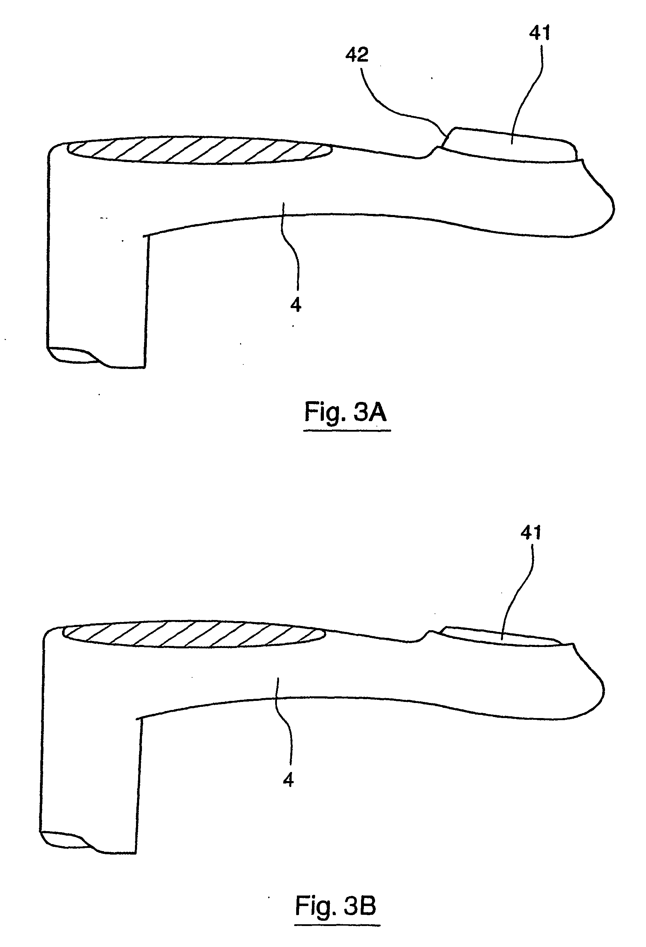

Une extrémité de la pièce 6 reçoit une extrémité 4111 du câble de verrouillage 411 couplé au bouton de commande 41 (décrit par la suite en référence aux figures 3A et 3B).

Le pion de verrouillage 34 est monté sur une lame 341 repliée de façon à former un ressort à l'intérieur du coulisseau 7. Sous l'effet de la force de rappel correspondante, le pion 34 est repoussé vers l'extérieur de la pièce 6 et du bras-poussoir 3, au travers d'un orifice 71 ménagé dans le coulisseau 7, de façon à assurer le verrouillage. La lame 341 est placée à l'intérieur d'un logement 62, qui assure son bon positionnement, et son guidage lors du déverrouillage.

Lorsque l'on agit sur le câble 411, la pièce 6 est déplacée vers le haut. A l'intérieur du logement 62, la lame 341 ne peut pas suivre le mouvement imprimé à la pièce 6, puisque le pion 34 la solidarise au coulisseau 7 et au bras-poussoir 3. Les deux surfaces de contact 342 et 343 coopèrent avec les deux plans inclinés de guidage 63, 64 ménagés à l'intérieur du logement 62.

En suivant le déplacement dicté par ces plans inclinés 63, 64, sous l'effet de la traction du câble 411, le pion 34 se rétracte à l'intérieur du logement 62, tout en restant dans la collerette 721 du coulisseau 7.

A ce stade, le coulisseau 7 est libre de coulisser à l'intérieur de l'élément actif 34 du bras poussoir 3. Aussi, sous l'effet du ressort 71 qui le relie à l'élément passif 33, l'ensemble des premiers moyens de verrouillage qui viennent d'être décrit se déplacent en direction de l'élément passif 33, jusqu'à ce que le ressort 71, qui agit jusque là en traction, occupe une position de repos.

En conséquence, dans la configuration illustrée par la figure 2B, le ressort 35 et le ressort 71 sont tous deux au repos, et tendent donc à maintenir l'ensemble dans la position qu'il occupe une fois le pliage du châssis amorcé, y compris concernant la position du câble de verrouillage lié à l'ensemble, et y compris concernant la position du moyen de commande par l'intermédiaire duquel on agit sur le câble de verrouillage.

On note que, selon une variante envisageable, les ressorts 35 et 71 peuvent être remplacés par un ressort unique, présentant éventuellement sur sa longueur deux raideurs différentes (pour agir, si besoin, à la façon de deux ressorts distincts).

Selon encore une autre variante, il est possible de se passer de moyens de rappel pour la fonction d'amorçage du pliage, celui-ci pouvant être obtenu par le seul effet de la gravité (et/ou une poussée de l'utilisateur sur le poussoir) agissant sur le poussoir dès que le premier verrou est déverrouillé. Ceci est notamment possible dans le cas où le poussoir et le brancard avant sont montés coulissant l'un par rapport à l'autre, et équipés de moyens facilitant ce coulissement.

- En référence aux figures 3A et 3B, les moyens de commande sont montés sur la poignée de guidage 4 et sont ici constitués par un bouton poussoir 41 mobile entre une position de repos (figure 3A) et une position de déverrouillage (figure 3B) dans laquelle il est susceptible d'être maintenu grâce au système des ressorts 35 et 71 selon la technique décrite précédemment.

A titre indicatif, une telle indication visuelle pourra être simplement obtenue en prévoyant de revêtir la zone 42 d'une couleur spécifique, par exemple rouge, dans le but d'attirer l'attention de l'utilisateur.

Par ailleurs, dans le but de conserver les avantages de confort et de maniabilité procurés par les poussettes de l'art antérieur, on peut prévoir de rendre modifiable la position des poignées de guidage 4.

Pour ce faire, ces poignées 4 sont montés sur les bras poussoir 3 correspondants de façon à pouvoir être inclinées et/ou pivotées par rapport à ceux-ci. Dans ce cas, pour éviter toute interférence entre l'inclinaison de la poignée la position des câbles de déverrouillage, l'extrémité des câbles est montée libre en rotation par rapport aux moyens de commande (et par conséquent, également par rapport aux poignées).

Selon la voiture d'enfant qui vient d'être décrite, on obtient donc une cinématique de pliage se décomposant essentiellement de la manière suivante :
- les premiers moyens de verrouillage sont déverrouillés à l'aide des moyens de commande présents sur la poignée de guidage ;
- le pliage est amorcé, jusqu'à ce que les éléments du poussoir viennent en butée l'un contre l'autre, ce qui donne l'effet visuel souhaité, ceci sans nuire à la sécurité de l'enfant ;
- les deuxièmes moyens de verrouillage sont déverrouillés ;
- le pliage complet de la poussette est effectué.

Lors du dépliage, on fait coulisser inversement les poussoirs sur les brancards avant correspondant, jusqu'à ce que les deux moyens de verrouillage (ou au moins un) s'enclenchent.

On note que la technique selon l'invention peut de façon similaire être appliquée dans le cas d'un guidon, avec une commande unique. Dans ce cas, l'indication visuelle du déverrouillage pourra être prévue de façon qu'elle n'apparaisse que si le déverrouillage est effectif sur chacun des brancards avant, de façon à éviter un problème de demi déverrouillage.

L'invention peut également s'appliquer à d'autres types de poussettes (à trois roues par exemple) et/ou d'autres types de pliage.

## Revendications

1. Voiture d'enfant à châssis pliant comprenant des premiers et des deuxièmes moyens de verrouillage du pliage dudit châssis devant être tous deux amenés dans une position déverrouillée pour permettre le pliage complet dudit châssis,
le déverrouillage desdits premiers moyens de verrouillage entraînant un amorçage dudit pliage, jusqu'à une position intermédiaire à partir de laquelle le pliage ne peut être poursuivi qu'en déverrouillant lesdits deuxièmes moyens de verrouillage,
**caractérisée en ce qu'**elle comprend au moins un poussoir (3) comprenant au moins deux éléments (32, 33) susceptibles de coulisser l'un par rapport à l'autre pour amorcer le pliage dudit châssis lorsque lesdits premiers moyens de verrouillage sont déverrouillés.

2. Voiture d'enfant selon la revendication 1, **caractérisée en ce qu'**elle comprend des moyens de rappel élastique (35) montés entre lesdits deux éléments (32, 33) dudit poussoir (3), lesdits moyens de rappel (35) tendant à rapprocher lesdits deux éléments (32, 33) l'un de l'autre lorsque lesdits premiers moyens de verrouillage sont déverrouillés.

3. Voiture d'enfant selon l'une quelconque des revendications 1 et 2, **caractérisée en ce que** lesdits deux éléments (32, 33) dudit poussoir sont susceptibles de coulisser l'un par rapport à l'autre sur une distance de l'ordre de 1 à 2 cm.

4. Voiture d'enfant selon l'une quelconque des revendications 1 à 3, **caractérisé en ce que** l'un desdits deux éléments dudit poussoir (3), dit élément passif (33), reste fixe pendant l'amorçage du pliage tandis que l'autre desdits deux éléments, dit élément actif (32), est mobile pendant l'amorçage du pliage, et **en ce que** lesdits premiers moyens de verrouillage sont portés par ledit élément actif (32) dudit poussoir (3).

5. Voiture d'enfant selon l'une quelconque des revendications 1 à 4, **caractérisée en ce qu'**elle comprend ledit poussoir (3) et au moins un brancard avant (1) montés coulissant l'un par rapport à l'autre, sans espace entre eux, ledit poussoir (3) présentant au moins un rail (31) et ledit brancard avant (1) présentant au moins un coulisseau prévu (11) pour coulisser dans ledit rail (31).

6. Voiture d'enfant selon l'une quelconque des revendications 4 et 5, **caractérisé en ce que** lesdits premiers moyens de verrouillage comprennent au moins un pion de verrouillage (34) coopérant avec une encoche (12) correspondante ménagée dans ledit brancard avant (1), ledit pion (34) étant monté de façon qu'il se rétracte à l'intérieur dudit élément actif (32) dudit poussoir (3) en position déverrouillée.

7. Voiture d'enfant selon la revendication 6, **caractérisé en ce que** ledit pion (34) est monté sur une lame logée (341) dans un logement (62) d'une pièce (6) pouvant coulisser à l'intérieur d'un coulisseau (7) susceptible de coulisser à l'intérieur dudit poussoir (3) et dont l'une des extrémités est couplée audit élément passif (33) dudit poussoir (3), ladite pièce (6) étant reliée à des moyens de commande (41), ledit logement étant conformé de façon que :
- en position de repos desdits moyens de commande, ledit pion (34) tend à coopérer avec l'encoche correspondante (12) ;
- lorsqu'on agit sur lesdits moyens de commande, la lame (341) portant ledit pion (34) est guidée vers l'intérieur dudit coulisseau (7), entraînant ledit pion (34) et permettant ainsi le déverrouillage.

8. Voiture d'enfant selon la revendication 7, **caractérisée en ce qu'**elle comprend des moyens permettant de maintenir lesdits moyens de commande (41) desdits premiers moyens de verrouillage dans une position correspondant au déverrouillage desdits premiers moyens de verrouillage jusqu'à un nouveau verrouillage de ceux-ci.

9. Voiture d'enfant selon les revendications 7 ou 8, **caractérisée en ce que** ledit coulisseau (7) et ledit élément passif (33) dudit poussoir (3) sont reliés par l'intermédiaire de moyens de rappel élastique (71) tendant à rapprocher ledit coulisseau (7) et ledit élément passif (33), lorsque lesdits premiers moyens de verrouillage sont en position déverrouillée.

10. Voiture d'enfant selon l'une quelconque des revendications 8 et 9, **caractérisée en ce que** lesdits moyens de commande (41) sont montés sur leur support de façon à laisser apparaître une indication visuelle (42) du déverrouillage desdits premiers moyens de verrouillage.

11. Voiture d'enfant selon l'une quelconque des revendications 7 à 10, **caractérisée en ce que** lesdits premiers moyens de verrouillage sont commandés de façon déportée à l'aide desdits moyens de commande (41).

12. Voiture d'enfant selon la revendication 11, **caractérisée en ce que** lesdits moyens de commande (41) sont montés sur ladite poignée de guidage (4), celle-ci étant montée sur ledit poussoir (3) de façon à pouvoir pivoter par rapport à celui-ci, lesdits moyens de commande (41) et lesdits moyens de verrouillage étant reliés par un câble (411) dont l'extrémité est montée libre en rotation par rapport auxdits moyens de commande (41).

13. Voiture d'enfant selon l'une quelconque des revendications 1 à 12, **caractérisée en ce que** lesdits deuxièmes moyens de verrouillage (51) sont portés par une pièce support (5) montée sensiblement au sommet du compas formé, en position dépliée dudit châssis, par ledit brancard avant (1) et ledit brancard arrière (2).

14. Voiture d'enfant selon la revendication 13, **caractérisée en ce que** le déverrouillage desdits deuxièmes moyens de verrouillage (51) permet le coulissement complet dudit poussoir (3) par rapport audit brancard avant (1).

15. Voiture d'enfant selon la revendication 14, **caractérisée en ce que** le déverrouillage desdits deuxièmes moyens de verrouillage (51) permet également le pivotement du brancard arrière (2) en direction dudit brancard avant (1).

16. Châssis pliant pour voiture d'enfant, comprenant au moins un brancard avant (1), un brancard arrière (2), et un poussoir (3) coopérant avec une poignée de guidage (4), et comprenant des premiers et des deuxièmes moyens de verrouillage du pliage dudit châssis, lesdits premiers et des deuxièmes moyens de verrouillage devant être tous deux amenés en position déverrouillée pour permettre le pliage complet dudit châssis,
comprenant des moyens pour amorcer le pliage dudit châssis lorsque lesdits premiers moyens de verrouillage sont déverrouillés, jusqu'à une position à partir de laquelle le pliage ne peut être poursuivi qu'en déverrouillant lesdits deuxièmes moyens de verrouillage
**caractérisé en ce que** ledit poussoir (3) comprend au moins deux éléments (32, 33) susceptibles de coulisser l'un par rapport à l'autre pour amorcer le pliage dudit châssis lorsque lesdits premiers moyens de verrouillage sont déverrouillés.

## Claims

1. Folding-frame pushchair comprising first and second means for locking the folding of said frame, both having to be moved into an unlocked position in order to complete folding of said frame to take place, the unlocking of said first means for locking causing a start of said folding, up to an intermediate position from which the folding can be continued only with the unlocking of said second means for locking, **characterized in that** it comprises at least one push arm (3) comprising at least two elements (32 and 33), one being capable of sliding with respect to the other to start the folding of said frame when said first means for locking are unlocked.

2. Pushchair according to claim 1, **characterized in that** it comprises elastic return means (35) fitted between said two elements (32 and 33) of said push arm (3), said return means (35) tending to draw said two elements (32 and 33) closer to each other when said first means for locking are unlocked.

3. Pushchair according to either of claims 1 and 2, **characterized in that** said two elements (32 and 33) of said push arm are capable of sliding with respect to each other for a distance of the order of 1 to 2 cm.

4. Pushchair according to any one of claims 1 to 3, **characterized in that** one of said two elements of said push arm (3), called the passive element (33), remains fixed during the start of the folding, whereas the other of said two elements, called the active element (32), is movable during the start of the folding, and **in that** said first means of locking are carried by said active element (32) of said push arm (3).

5. Pushchair according to any one of claims 1 to 4, **characterized in that** it comprises said push arm (3) and at least one front shaft (1) fitted so as to slide with respect to each other, without space between them, said push arm (3) having at least one rail (31) and said front shaft (1) having at least one slide (11) provided for sliding in said rail (31).

6. Pushchair according to either of claims 4 and 5, **characterized in that** the said first means of locking comprise at least one locking pin (34) cooperating with a corresponding notch (12) formed in said front shaft (1), said pin (34) being fitted so that it retracts inside said active element (32) of said push arm (3) in the unlocked position.

7. Pushchair according to claim 6, **characterized in that** said pin (34) is fitted to a strip (341) housed in a housing (62) of a part (6) which can slide in a slide (7) capable of sliding inside said push arm (3) and one of the ends of which is coupled to said passive element (33) of said pushing member (3), said part (6) being connected to operating means (41), said housing being formed so that:
- in a position of rest of said operating means, said pin (34) tends to cooperate with the corresponding notch (12) and
- when said operating means are used, the strip (341) carrying said pin (34) is guided towards the inside of said slide (7), taking said pin (34) with it and thus making unlocking possible.

8. Pushchair according to claim 7, **characterized in that** it comprises means allowing to keep said operating means (41) of said first means for locking in a position corresponding to the unlocking of said first means for locking until a new locking of these.

9. Pushchair according to claim 7 or 8, **characterized in that** said slide (7) and said passive element (33) of said push arm (3) are connected by elastic return means (71) tending to draw together said slide (7) and said passive element (33), when said first means for locking are in the unlocked position.

10. Pushchair according to either of claims 8 and 9, **characterized in that** said operating means (41) are fitted to their support so as to allow the appearance of a visual indication (42) of the unlocking of said first means for locking.

11. Pushchair according to any one of claims 7 to 10, **characterized in that** said first means for locking are operated in an offset manner with the assistance of said operating means (41).

12. Pushchair according to claim 11, **characterized in that** said operating means (41) are fitted to said guiding handle (4), the latter being fitted to said push arm (3) so that it can pivot with respect to the latter, said operating means (41) and said means for locking being connected by a cable (411), the end of which is fitted free to rotate with respect to said operating means (41).

13. Pushchair according to any one of claims 1 to 12, **characterized in that** said second means for locking (51) are carried by a support part (5) fitted substantially at the top of the fork formed, in the unfolded position of said frame, by said front shaft (1) and said rear shaft (2).

14. Pushchair according to claim 13, **characterized in that** the unlocking of said second means for locking (51) allows the full sliding of said push arm (3) with respect to said front shaft (1) to take place.

15. Pushchair according to claim 14, **characterized in that** the unlocking of said second means for locking (51) also allows the rear shaft (2) to pivot in the direction of said front shaft (1).

16. Folding frame for a pushchair, comprising at least one front shaft (1), one rear shaft (2) and one push arm (3) cooperating with a guiding handle (4) and comprising first and second means for locking the folding of said frame, said first means for locking and second means for locking both having to be moved into an unlocked position in order for complete folding of said frame to take place, comprising means for starting the folding of said frame when said first means for locking are unlocked, up to a position from which the folding can be continued only with the unlocking of said second means for locking, **characterized in that** said pushing member (3) comprises at least two elements (32 and 33), one capable of sliding with respect to the other to start the folding of said frame when said first means for locking are unlocked.

## Patentansprüche

1. Kinderwagen mit zusammenklappbarem Gestell umfassend ersten und zweiten Verriegelungsmitteln des Zusammenklappens des Gestells, die beide in eine entriegelte Position gebracht werden müssen, um das vollständige Zusammenklappen des Gestells zu ermöglichen,
wobei das Entriegeln der ersten Verriegelungsmittel zum Einleiten des Zusammenklappens bis in eine Zwischenposition führt, von der aus das Zusammenklappen nur durch Entriegeln der zweiten Verriegelungsmittel fortgesetzt werden kann,
**dadurch gekennzeichnet, dass** er mindestens eine Schiebestange umfasst (3), die mindestens zwei Elemente (32, 33) umfasst, die zueinander verschiebbar sind, um das Zusammenklappen des Gestells einzuleiten, wenn die ersten Verriegelungsmittel entriegelt werden.

2. Kinderwagen nach Anspruch 1, **dadurch gekennzeichnet, dass** er federnde Rückholmittel (35) umfasst, die zwischen den zweiten Elementen (32, 33) der Schiebestange (3) angebracht sind, wobei diese Rückholmittel (35) bestrebt sind, die beiden Elemente (32, 33) zueinander zu führen, wenn die ersten Verriegelungsmittel entriegelt werden.

3. Kinderwagen nach einem der Ansprüche 1 und 2, **dadurch gekennzeichnet, dass** die beiden Elemente (32, 33) der Schiebestange über einen Weg von ungefähr 1 bis 2 cm zueinander verschiebbar sind.

4. Kinderwagen nach einem der Ansprüche 1 bis 3, **dadurch gekennzeichnet, dass** eines der beiden Elemente der Schiebestange (3), das so genannte passive Element (33), während des Einleitens des Zusammenklappens fix bleibt, während das andere der beiden Elemente, das so genannte aktive Element (32), während des Einleitens des Zusammenklappens beweglich ist, und **dadurch**, dass die ersten Verriegelungsmittel vom aktiven Element (32) der Schiebestange (3) getragen werden.

5. Kinderwagen nach einem der Ansprüche 1 bis 4, **dadurch gekennzeichnet, dass** er die Schiebestange (3) und mindestens eine vordere Tragstange (1) umfasst, die ohne Zwischenraum zueinander verschiebbar angebracht sind, wobei die Schiebestange (3) mindestens eine Schiene (31) aufweist und die vordere Tragstange (1) mindestens einen Schieber (11) aufweist, der in dieser Schiene (31) gleiten soll.

6. Kinderwagen nach einem der Ansprüche 4 und 5, **dadurch gekennzeichnet, dass** die ersten Verriegelungsmittel mindestens einen Verriegelungszapfen (34) umfassen, der mit einer entsprechenden Nut (12) zusammenwirkt, die in der vorderen Tragstange (1) ausgespart ist, wobei der Zapfen (34) so angebracht ist, dass er sich in der entriegelten Position in das aktive Element (32) der Schiebestange (3) zurückzieht.

7. Kinderwagen nach Anspruch 6, **dadurch gekennzeichnet, dass** der Zapfen(34) an einem Plättchen (341) angebracht ist, das in einer Aufnahme (62) eines Teils (6) sitzt, welches innerhalb eines Schiebers (7) gleiten kann, der innerhalb der Schiebestange (3) verschiebbar ist und von dem ein Ende mit dem passiven Element (33) der Schiebestange (3) gekuppelt ist, wobei das Teil (6) mit Betätigungsmitteln (41) verbunden ist, wobei die Aufnahme so ausgebildet ist, dass:
- der Zapfen (34) in der Ruheposition der Betätigungsmittel bestrebt ist, mit der entsprechenden Nut (12) zusammenzuwirken;
- das Plättchen (341), das den Zapfen (34) trägt, beim Einwirken auf die Betätigungsmittel in den Schieber (7) hinein geführt wird, dabei den Zapfen (34) mitnimmt und so die Entriegelung ermöglicht.

8. Kinderwagen nach Anspruch 7, **dadurch gekennzeichnet, dass** er Mittel umfasst, die es ermöglichen, die Betätigungsmittel (41) für die ersten Verriegelungsmittel in einer Position zu halten, die der Entriegelung der ersten Verriegelungsmittel entspricht, bis diese erneut verriegelt werden.

9. Kinderwagen nach den Ansprüchen 7 oder 8, **dadurch gekennzeichnet, dass** der Schieber (7) und das passive Element (33) der Schiebestange (3) über federnde Rückholmittel (71) verbunden sind, die bestrebt bzw. dazu vorgespannt sind, den Schieber (7) und das passive Element (33) zueinander zu führen, wenn sich die die ersten Verriegelungsmittel in der entriegelten Position befinden.

10. Kinderwagen nach einem beliebigen der Ansprüche 8 und 9, **dadurch gekennzeichnet, dass** die Betätigungsmittel (41) so an ihrem Halter angebracht sind, dass eine optische Anzeige (42) der Entriegelung der ersten Verriegelungsmittel gegeben ist.

11. Kinderwagen nach einem der Ansprüche 7 bis 10, **dadurch gekennzeichnet, dass** die ersten Verriegelungsmittel über eine Distanz bzw. abgesetzt mit Hilfe der Betätigungsmittel (41) betätigt werden.

12. Kinderwagen nach Anspruch 11, **dadurch gekennzeichnet, dass** die Betätigungsmittel (41) am Führungsgriff (4) angebracht sind, der wiederum so an der Schiebestange (3) angebracht ist, dass er in Bezug auf diese schwenken kann, wobei die Betätigungsmittel (41) und die Verriegelungsmittel über ein Seil (411) verbunden sind, dessen Ende in Bezug auf die Betätigungsmittel (41) drehbeweglich angebracht ist.

13. Kinderwagen nach einem der Ansprüche 1 bis 12, **dadurch gekennzeichnet, dass** die zweiten Verriegelungsmittel (51) von einem Halteteil (5) getragen werden, das in etwa an der Spitze des Zirkels angebracht ist, der in der ausgeklappten Position des Gestells durch die vordere Tragstange (1) und die hintere Tragstange (2) gebildet wird.

14. Kinderwagen nach Anspruch 13, **dadurch gekennzeichnet, dass** das Entriegeln der zweiten Verriegelungsmittel (51) das vollständige Schieben der Schiebestange (3) in Bezug auf die vordere Tragstange (1) ermöglicht.

15. Kinderwagen nach Anspruch 14, **dadurch gekennzeichnet, dass** das Entriegeln der zweiten Verriegelungsmittel (51) auch das Schwenken der hinteren Tragstange (2) in Richtung zur vorderen Tragstange (1) ermöglicht.

16. Zusammenklappbares Gestell für einen Kinderwagen, umfassend mindestens eine vordere Tragstange (1), eine hintere Tragstange (2) und eine Schiebestange (3), die mit einem Führungsgriff (4) zusammenwirkt, sowie erste und zweite Mittel zur Verriegelung des Zusammenklappens des Gestells, wobei die ersten und zweiten Verriegelungsmittel beide in die entriegelte Position gebracht werden müssen, um das vollständige Zusammenklappen des Gestells zu ermöglichen,
mit Mitteln zum Einleiten des Zusammenklappens des Gestells, wenn die ersten Verriegelungsmittel entriegelt werden, bis in eine Position, von der aus das Zusammenklappen nur durch Entriegeln der zweiten Verriegelungsmittel fortgesetzt werden kann,
**dadurch gekennzeichnet, dass** die Schiebestange (3) mindestens zwei Elemente (32, 33) umfasst, die zueinander verschiebbar sind, um das Zusammenklappen des Gestells einzuleiten, wenn die ersten Verriegelungsmittel entriegelt werden.
